# EUROPEAN PATENT SPECIFICATION

(11) **EP 1 283 746 B1**
(45) Date of publication and mention of the grant of the patent: **29.02.2012**
(21) Application number: 01940410.2
(22) Date of filing: 04.05.2001
(51) Int. Cl.: B01J 37/02, B01J 23/75, C10G 2/00, B01J 37/03

(54) **A CATALYST SUPPORT AND A SUPPORTED METAL CATALYST, A PROCESS FOR THEIR PREPARATION, AND THE USE OF THE CATALYST**
EIN KATALYSATORTRÄGER UND EIN METALLKATALYSATOR AUF EINEM TRÄGER, EIN VERFAHREN FÜR SEINE HERSTELLUNG UND SEINE VERWENDUNG
SUPPORT CATALYTIQUE ET CATALYSEUR METALLIQUE SUPPORTE, PROCEDE DE PREPARATION ASSOCIE ET UTILISATION DU CATALYSEUR

(30) Priority: 04.05.2000 EP 00303760
(43) Date of publication of application: 19.02.2003
(73) Proprietor: Shell Internationale Research Maatschappij B.V., 2596 HR Den Haag (NL)
(72) Inventor: LEDNOR, Peter, William, NL-1031 CM Amsterdam (NL); NIESEN, Gerardus, Petrus, Lambertus, NL-1031 CM Amsterdam (NL); SIJPKES, Andre, Harmen, NL-1031 CM Amsterdam (NL)
(86) International application number: PCT/EP2001/005126
(87) International publication number: WO 2001/083108

(56) References cited:
- EP-A- 0 097 047
- EP-A- 0 638 361
- US-A- 4 251 394
- US-A- 5 783 607

## Description

The present invention relates to a catalyst support and a supported metal catalyst. The invention also relates to a process for the preparation of the catalyst support and the supported metal catalyst. Further, the invention relates to a process for the preparation of hydrocarbons from synthesis gas in which process a supported catalyst according to this invention is used.

The catalytic preparation of hydrocarbons from synthesis gas, i.e. a mixture of carbon monoxide and hydrogen, is well known in the art and is commonly referred to as Fischer-Tropsch synthesis.

Catalysts suitable for use in a Fischer-Tropsch synthesis process typically contain a catalytically active metal of Group VIII of the Periodic Table of the Elements (Handbook of Chemistry and Physics, 68th edition, CRC Press, 1987-1988) supported on a refractory oxide, such as alumina, titania, zirconia, silica or mixtures of such oxides. In particular, iron, nickel, cobalt and ruthenium are well known catalytically active metals for such catalysts. Reference may be made to EP-A-398420, EP-A-178008, EP-A-167215, EP-A-168894, EP-A-363537, EP-A-498976 and EP-A-71770.

In the Fischer-Tropsch synthesis, as in many other chemical reactions, the solid, supported catalyst, the reactants and a diluent, if present, in contact with one another usually form a three phase system of gas, liquid and solid. Such three phase systems may be operated, for example, in a packed-bed reactor or in a slurry-bubble reactor. A packed-bed reactor may comprise a packed bed of solid catalyst particles through which there is a flow of gaseous and liquid reactants. A slurry-bubble reactor may comprise a continuous phase of liquid with the solid catalyst suspended therein and gaseous reactants flowing as bubbles through the liquid. In all such operations it is important that the supported catalyst is mechanically strong, so that the catalyst particles maintain their integrity through the entire operation. The stronger the catalyst support or the supported catalyst, the higher a catalyst bed may be in a packed-bed reactor or the longer the residence time of the catalyst may be in a slurry-bubble reactor.

EP-A-0097047 describes catalysts for the hydrogenation of organic compounds. The supports for these catalysts are prepared from an aqueous reaction mixture comprising a water-soluble aluminium salt, a water-soluble silicate, and solid porous particles.

US-A-4251394 describes nickel hydrogenation catalysts prepared from an aqueous mixture containing nickel, copper and silicate ions and solid porous carrier particles.

US-A-5783607 describes a process in which titanium is deposited on a partially reduced catalyst precursor comprising a support selected from the group formed by at least one oxide of an element selected from the group formed by Si, Al, Ti, Zr, Sn, Zn, Mg, or Ln; and an element selected from the group formed by copper, ruthenium, platinum, palladium, scandium and yttrium; and cobalt.

Further, there is a continuous interest in finding catalysts for use in the Fischer-Tropsch synthesis which provide an improved activity and an improved selectivity in the conversion of carbon monoxide into valuable hydrocarbons, in particular hydrocarbons containing 5 or more carbon atoms ("C5+ hydrocarbons" hereinafter), and minimise the formation of carbon dioxide, which is a carbon containing by-product of low value, or even negative value.

It has now surprisingly been found that when the refractory oxide is admixed with a solution of a precursor of the same refractory oxide in a solvent, dried and calcined, a catalyst support is obtained which has more strength than the original refractory oxide. A catalytically active metal may be introduced subsequently, or together with the precursor of the refractory oxide. The catalyst so obtained exhibits a higher activity in the Fischer-Tropsch synthesis, without detriment to the selectivity. An additional beneficial effect is that the particles have a higher density, so that more of the catalyst can be employed in a given space. Both the higher activity and the higher density causes that the productivity of a reactor can be increased without increasing the volume of the reactor.

An advantageous aspect is that the improved catalyst properties can be obtained without the need of introducing a further, i.e. different element into the support or the catalyst. Namely, the presence of such a further element could influence the catalyst properties unpredictably in an adverse manner.

Accordingly, the present invention provides a process for preparing a catalyst support or a supported metal catalyst which process comprises:
(a) admixing a refractory oxide comprising titania having a surface area of at least 0.5 m²/g with a solution of a precursor of the refractory oxide and, if a supported metal catalyst is prepared, with a precursor of the metal or the metal itself, yielding a slurry,
(b) drying of the slurry, and
(c) calcining.

The invention also relates to the catalyst support and the supported metal catalyst which are obtainable by this process. The invention also relates to the use of the supported metal catalyst in a three phase chemical process, in particular to a process for producing hydrocarbons, which process comprises contacting a mixture of carbon monoxide and hydrogen at elevated temperature and pressure with a supported catalyst according to the invention.

In this invention a refractory oxide is used. The refractory oxide comprises titania, in particular the refractory oxide is a titania.

According to a preferred embodiment, the refractory oxide comprising titania may further comprise up to 50 %w of another refractory oxide, typically silica or alumina, based on the total weight of the refractory oxide. More preferably, the additional refractory oxide, if present, comprises up to 20 %w, even more preferably up to 10 %w, on the same basis.

The refractory oxide most preferably consists of titania, in particular titania which has been prepared in the absence of sulphur-containing compounds. An example of such preparation method involves flame hydrolysis of titanium tetrachloride. It will be appreciated that the titania powder derived from such preparation method may not be of the desired size and shape. Thus, a shaping step may be applied. Shaping techniques are well known to the skilled person and include palletising, extrusion, spray-drying and hot oil dropping methods.

The refractory oxide is a material having a large surface area. The surface area is at least 0.5 m²/g, suitably at least 10 m²/g, especially at least 25 m²/g, and more specially at least 35 m²/g, based on BET surface area measurements according to ASTM D3663-92. Suitably the surface area is at most 400 m²/g, especially at most 200 m²/g, on the same basis. Preferably the surface area is in the range of from 40 m²/g to 100 m²/g, on the same basis. Ceramic materials are frequently considered not to be suitable, as their surface area is generally not sufficient large.

The precursor of the refractory oxide is a compound which is soluble in the solvent which is used in the process of this invention, and which yields the refractory oxide upon calcination according to step (c) of the process of the invention. The refractory oxide is insoluble or practicaly insoluble in the solvent, so that it forms a slurry in the presence of the solution of the precursor of the refractory oxide in the solvent.

The solvent may be an organic solvent, such as a lower alcohol, a lower ketone, a lower ester, or a lower ether, for example ethanol, acetone, methyl ethyl ketone. ethyl acetate, diethyl ether or tetrahydrofuran. In this patent document, when the term "lower" is used in conjunction with an organic compound the term specifies that the organic compound has at most six carbon atoms, in particular four carbon atoms. More suitable solvents are aqueous solvents, such as a mixture of an organic solvent and water, preferably comprising at least 50 %w of water and less than 50 %w of organic solvent, based on the total weight of the solvent. Most suitably, water is used as the single solvent.

The skilled person will appreciate that suitable precursors may form, apart from the refractory oxide, volatile species which are easily removed during the process, in particular during calcination, by evaporation. Such volatile species may be for example carbon dioxide, carbon monoxide, hydrohalogenic acid and ammonia. The skilled person is able to select suitable combinations of precursors and solvents for any kind of refractory oxide.

The precursor of the refractory oxide may be an organic salt or complex compound, in particular having up to 20 carbon atoms. Examples of such salts and complex compounds are salts, such as acetates, propionates, citrates; chelates, such as acetylacetonates, alkyl acetoacetates and chelates with lactic acid; alcoholates, such as ethylates, aminoethylates and isopropylates; and alkyl compounds, such as ethyl and isooctyl compounds. Alternatively, the precursor of the refractory oxide is an inorganic compound, such as a hydroxide; or an inorganic salt, such as a halide.

Suitable precursors of titanium dioxide are for example, tetraethyl titanate, isostearoyl titanate and octyleneglycol titanate and triethanolamine titanate. A very suitable compound, in particular for use in combination with water, is the ammonium salt of lactic acid chelated titanate. Such compounds are available from DUPONT under the trademark TYZOR. Precursors of titanium dioxide may be used in conjunction with a refractory oxide which comprises a titania.

Likewise, suitable aluminium compounds, silicon compounds, zirconium compounds may be selected for use in conjunction with refractory oxides which comprise alumina, silica or zirconia, respectively.

The solids content of the slurry formed in step (a) may be up to 90% by weight based on the total slurry. It will be appreciated that the mixing method largely depends on the solids contents of the slurry. The admixing of step (a) may suitably be performed by methods known to those skilled in the art, such as by kneading, mulling or stirring.

The quantity of the precursor of the refractory oxide, relative to the quantity of the refractory oxide employed in step (a), may be selected within wide limits. Typically, the quantity of the precursor of the refractory oxide is at least 0.5 %w and it is typically at most 25 %w, calculated as the weight of the refractory oxide which can be formed from the precursor, relative to the weight of the refractory oxide employed in step (a). Preferably the quantity of the refractory oxide is in the range of from 1 to 10 %w, for example 5 %w, on the same basis.

It will be appreciated that the obtained slurry may not be of the desired size and shape to serve as a catalyst support of as supported catalyst. Thus, a shaping step may be required. Shaping techniques are well known to those skilled in the art and include palletizing, granulating, extrusion, spray-drying, and hot oil dropping methods.

The process of the present invention involves a drying step, i.e. step (b), in which at least a portion of the solvent is removed. Typically, the compositions will be dried after shaping and before calcination. Optionally, shaping and drying may be combined in one step, for example in spray-drying. Alternatively, the slurry may be dried before shaping it, for example by drying a cake before crushing it. It will be appreciated that drying and calcining may be combined in one step.

In one embodiment of the invention, the solids content of the slurry obtained in step (a) is relatively high and therefore the admixing is suitably performed by kneading or mulling, and the thus-obtained slurry is shaped by pelletizing, extrusion, granulating or crushing, preferably by extrusion. In this embodiment the solids content of the slurry is typically in the range of from 30 to 90 %w, preferably of from 50 to 80 %w, based on the total slurry.

Typically, the ingredients of the slurry are mulled for a period of from 5 to 120 minutes, preferably from 15 to 90 minutes. The mulling process may be carried out over a broad range of temperature, preferably from 15 to 90 °C. The mulling process is conveniently carried out at ambient pressure. Any suitable, commercially available mulling machine may be employed.

To improve the flow properties of the slurry, it is preferred to include one or more flow improving agents and/or extrusion aids, peptising agents and burn-out materials in the slurry prior to extrusion. Such additives and their use are known in the art, cf. for example WO 99/34917. Very suitable peptising agents for use in this invention are weak acids, in particular acids having a pKa of at least 0, suitably at most 8, preferably in the range of 0.5 to 6, when measured in water at 25 °C. More in particular, carboxylic acids are of interest, for example formic acid, acetic acid, citric acid, oxalic acid and propionic acid.

Extrusion may be effected using any conventional, commercially available extruder. In particular, a screw-type extruding machine may be used to force the slurry through the orifices in a suitable die plate to yield extrudates of the desired form. The strands formed upon extrusion may be cut to the desired length.

After extrusion, the extrudates are dried. Drying may be effected at an elevated temperature, for example above 30 °C, preferably up to 500 °C, more preferably up to 300 °C. The period for drying is typically up to 5 hours, more preferably from 15 minutes to 3 hours.

In another embodiment of the invention, the solids contents of the slurry obtained in step (a) is such that the slurry can be shaped and dried by spray-drying. In this case the solids content of the slurry is typically in the range of from 1 to 30 %w, preferably of from 5 to 20 %w, based on the total slurry. The thus-obtained slurry is suitably shaped and dried by spray-drying.

The extruded and dried, spray-dried or otherwise-shaped and dried compositions are subsequently calcined. Calcination is effected at elevated temperature, preferably at a temperature between 400 and 750 °C, more preferably between 450 and 650 °C. The duration of the calcination treatment is typically from 5 minutes to several hours, preferably from 15 minutes to 4 hours. Suitably, the calcination treatment is carried out in an oxygen-containing atmosphere, preferably air. It will be appreciated that, if desired, the drying step and the calcining step may be combined.

It will be appreciated that the most preferred method of preparation may vary, depending e.g. on the desired size of the catalyst particles. It belongs to the skill of the skilled person to select the most suitable method for a given set of circumstances and requirements.

A supported catalyst may be made which contains a catalytically active metal or a precursor of the catalytically active metal on the catalyst support of this invention. Typically a Group VIII metal may be deposited on the catalyst support, as in many chemical reactions, such as Fischer-Tropsch synthesis and hydrogenations, a supported Group VIII metal catalyst is used.

For use in the Fischer-Tropsch synthesis it is preferred that the Group VIII metal is selected from iron, nickel, cobalt and ruthenium. More preferably, cobalt or ruthenium is selected as the Group VIII metal, because cobalt based catalysts and ruthenium based catalysts give a relatively high yield of C₅+ hydrocarbons. Most preferably, cobalt is selected as the Group VIII metal. A further metal may be present in order to improve the activity of the catalyst or the selectivity of the conversion of synthesis gas into hydrocarbons. Suitable further metals may be selected from manganese, vanadium, zirconium, rhenium, scandium and ruthenium. A preferred further metal is manganese or vanadium, in particular manganese.

The amount of catalytically active metal, in particular Group VIII metal, present in the supported metal catalyst may vary widely. Typically, the supported metal catalyst comprises from 1 to 50 %w of the catalytically active metal, in particular Group VIII metal when the catalyst is used in the Fischer-Tropsch synthesis, based on the weight of the metal relative to the weight of supported metal catalyst, preferably 3 to 40 %w, more preferably 5 to 30 %w on the same basis. The amount of the further metal, if present, is typically from 0.05 and 60 %w, more typically from 0.1 to 25 %w, on the same basis. The atomic ratio of the Group VIII metal to the further metal, as present in the catalyst, is typically at least 5:1 and it is typically at most 200:1.

The supported metal catalyst may suitably be prepared by methods known to the skilled person.

It is preferred to introduce the catalytically active components or precursors thereof during step (a). An alternative is that the catalytically active components or precursors may be deposited onto to the support after the calcination of step (c). The term "catalytically active components" includes any catalytically active metal, in particular the Group VIII metal and any further metal, as present in the supported metal catalyst. The term also includes precursor compounds of the catalytically active metal. It is not excluded that, in addition to the catalytically active components and the support, the supported metal catalyst comprises further components.

Suitable catalytically active components include salts of the catalytically active metal, such as nitrates, carbonates and acetates, hydroxides and oxides of the catalytically active metal, and the catalytically active metal itself. The catalytically active components may or may not be soluble in the solvent, or they may be partially soluble in the solvent.

If the catalytically active components or precursors are introduced to the support after the calcination of step (c), conventional methods may be applied. Such conventional methods involve, for example, precipitating the catalytically active components or precursors onto the support; spray-coating, kneading and/or impregnating the catalytically active components or precursors onto the support; and/or extruding one or more catalytically active components or precursors together with support material to prepare extrudates.

A preferred conventional method of preparing the supported metal catalyst is by impregnating onto the catalyst support the catalytically active components or precursors as aqueous solutions. In case a cobalt and manganese containing supported catalyst is to be prepared, most preferably a highly concentrated solution is employed. A suitable method to arrive at such a concentrated solution is to use a mixture of molten cobalt nitrate and manganese nitrate salts. The impregnation treatment is typically followed by drying and, optionally, calcining. For drying and calcining typically the same conditions may be applied as described hereinbefore.

Now turning to a use of the supported metal catalyst of this invention, as indicated hereinbefore, the supported metal catalyst may be used to catalyse a process for the preparation of hydrocarbons from carbon monoxide and hydrogen. Typically, when in use in that process, the metal which is present on the supported metal catalyst is a Group VIII metal and, typically, at least part of the Group VIII metal is present in its metallic state.

Therefore, it is normally advantageous to activate the supported Group VIII metal catalyst prior to use by a reduction, in the presence of hydrogen at elevated temperature. Typically, the reduction involves treating the catalyst at a temperature in the range from 100 to 450 °C, at elevated pressure, typically from 1 to 200 bar abs., frequently for 1 to 200 hours. Pure hydrogen may be used in the reduction, but it is usually preferred to apply a mixture of hydrogen and an inert gas, like nitrogen. The relative amount of hydrogen present in the mixture may range between 0.1 and 100 %v.

According to a preferred embodiment of the reduction, the catalyst is brought to the desired temperature and pressure level in a nitrogen gas atmosphere. Subsequently, the catalyst is contacted with a gas mixture containing only a small amount of hydrogen gas, the rest being nitrogen gas. During the reduction, the relative amount of hydrogen gas in the gas mixture is gradually increased up to 50 %v or even 100 %v.

It may be preferred to activate the supported Group VIII metal catalyst in-situ, that is inside the reactor for the preparation of hydrocarbons from synthesis gas. WO 97/17137 describes an in-situ catalyst activation process which comprises contacting the catalyst in the presence of hydrocarbon liquid with a hydrogen-containing gas at a hydrogen partial pressure of at least 15 bar abs., preferably at least 20 bar abs., more preferably at least 30 bar abs. Typically, in this process the hydrogen partial pressure is at most 200 bar abs.

The process for the preparation of hydrocarbons from synthesis gas is typically carried out at a temperature in the range of from 125 to 350 °C, preferably from 175 to 275 °C. The pressure is typically in the range of from 5 to 150 bar abs., preferably from 5 to 80 bar abs., in particular from 5 to 50 bar abs.

Hydrogen and carbon monoxide (synthesis gas) is typically fed to the process at a molar ratio in the range from 1 to 2.5. Low hydrogen to carbon monoxide molar ratios will increase the C₅+ selectivity of the catalysts, i.e. the selectivity of the formation of C₅+ hydrocarbons.

However, in the embodiment of the invention in which the Group VIII metal is cobalt and the further metal is manganese and/or vanadium, which are present in an atomic ratio of cobalt/(manganese + vanadium) of at least 12:1, the C₅+ selectivity of the catalyst is remarkably high, even when using synthesis gas having a high hydrogen to carbon monoxide atomic ratio. In this embodiment the hydrogen to carbon monoxide molar ratio in the range of from 1.5 to 2.5 may be used.

The gas hourly space velocity ("GHSV" hereinafter) may vary within wide ranges and is typically in the range from 400 to 10000 Nl/l/h, for example from 400 to 4000 Nl/l/h.

The term "GHSV" is well known in the art, and relates to the gas per hour space velocity, i.e. the volume of synthesis gas in Nl (i.e. at the standard temperature of 0 °C and the standard pressure of 1 bar (100,000 Pa)) which is contacted in one hour with one litre of catalyst particles, i.e. excluding interparticular void spaces. In the case of a fixed bed catalyst, the GHSV is usually expressed as per litre of catalyst bed, i.e. including interparticular void space. In that case a GHSV of 1600 Nl/l/h on catalyst particles corresponds to about 1000 Nl/l/h on catalyst bed.

The term "gas hourly weight velocity" ("GHWV" hereinafter) relates analogously to the volume of synthesis gas in Nl (i.e. at the standard temperature of 0 °C and the standard pressure of 1 bar (100,000 Pa)) which is contacted in one hour with one kg of catalyst particles. GHSV can be calculated from GHWV by multiplying GHWV with the applicable catalyst density.

The process for the preparation of hydrocarbons may be conducted using a variety of reactor types and reaction regimes, for example a fixed bed regime, a slurry phase regime or an ebulliating bed regime. It will be appreciated that the size of the catalyst particles may vary depending on the reaction regime they are intended for. It belongs to the skill of the skilled person to select the most appropriate catalyst particle size for a given reaction regime.

Further, it will be understood that the skilled person is capable to select the most appropriate conditions for a specific reactor configuration, the reaction regime and a work-up scheme. For example, the preferred gas hourly space velocity may depend upon the type of reaction regime that is being applied. Thus, if it is desired to operate the hydrocarbon synthesis process with a fixed bed regime, preferably the gas hourly space velocity is chosen in the range from 500 to 2500 Nl/l/h. If it is desired to operate the hydrocarbon synthesis process with a slurry phase regime, preferably the gas hourly space velocity is chosen in the range from 1500 to 7500 Nl/l/h.

It is a particular aspect of the invention that the catalyst support and the supported metal catalyst have an increased strength. Therefore, when in a chemical process a fixed bed regime is applied the catalyst bed can have more height, or when an slurry phase or an ebulliating bed regime is applied there is less attrition of catalyst particles. Less attrition may lead, advantageously, to a longer permissible residence time of the supported metal catalyst in the reactor, and/or to the less formation of fines. When there is less formation of fines there will be less danger that fine particles will pass the filter in a filtration step for removal of catalyst particles. It is preferred to use the supported metal catalyst of this invention in a slurry phase regime.

The invention will now be illustrated further by means of the following Examples.

### Example I

A slurry was prepared containing 20 parts by weight (pbw) commercially available titania powder (P25 ex. Degussa, BET surface area 50 m²/g (ASTM D3663-92)), 8.4 pbw commercially available CO(OH)₂ powder, 0.8 pbw Mn(Ac)_{2.4}H₂O ("Ac" means acetate), 3.7 pbw of the ammonium salt of lactic acid titanate (obtained as an aqueous solution under the trade mark TYZOR-LA), 1.3 ppb citric acid and 120 pbw water. The slurry was sprayed-dried through an atomizer. The resulting particles were calcined in air for 1 hour at 600 °C. The catalyst so prepared was subjected to various tests.

The particle density was found to be 2.25 g/ml. The strength of the catalyst particles was tested by subjecting a slurry containing 5 %v of the particles in water to high shear forces during 30 minutes, by means of a high-speed mixer operating at 5750 rpm. The temperature of the slurry is maintained at 20 °C. The particle size distribution of the fresh particles and of the particles after the shear treatment was determined by laser light diffraction. It was found that there was no significant decrease in the volume weighted average particle diameter caused by the shear treatment.

The catalyst was tested in a process for the preparation of hydrocarbons. A micro-flow reactor containing 10 ml of the catalyst in the form of a fixed bed of catalyst particles was heated to a temperature of 260 °C, and pressurised with a continuous flow of nitrogen gas to a pressure of 2 bar abs. The catalyst was reduced in-situ for 24 hours with a mixture of nitrogen and hydrogen gas. During reduction the relative amount of hydrogen in the mixture was gradually increased from 0 %v to 100 %v. The water concentration in the off-gas was kept below 3000 ppmv.

Following reduction the pressure was increased to 31 bar abs. The preparation of hydrocarbons was carried out with a mixture of hydrogen and carbon monoxide at a H₂/CO ratio of 1.1:1. The GHWV amounted to about 4200 Nl/kg/h. The reaction temperature, expressed as the weighted average bed temperature, was 240 °C. The weight time yield, expressed as grammes hydrocarbon product per kg catalyst particles per hour; the space time yield, expressed as grammes hydrocarbon product per litre catalyst particles (including the voids between the particles) per hour; the selectivity of CO₂, expressed in %mole CO₂ obtained relative to the number of moles CO converted; and the selectivity to hydrocarbons containing 5 or more carbon atoms (C₅+ selectivity), expressed as a weight percentage of the total hydrocarbon product, were determined after 40 hours of operation. The results are set out in Table I.

### Example II (comparative)

Example I was substantially repeated but with the difference that no ammonium salt of lactic acid titanate was present in the slurry. The particle density was found to be 1.84 g/ml. A 10% decrease in the volume weighted average particle diameter was caused by the shear treatment. Further results are set out in Table I.

**TABLE I**

| Example | I | II *) |
|---|---|---|
| Weight time yield (g/kg.h) | 496 | 405 |
| Space time yield (g/l.h) | 1136 | 746 |
| Selectivity CO₂ (%mole) | 0.78 | 0.76 |
| C₅+ selectivity (%w) | 88.3 | 87.5 |

| | | |
|---|---|---|
| *): Comparative | | |

It will be appreciated that in various aspects the catalyst of Example I, i.e. according to the invention, is much better than the catalyst of Example II, i.e. the comparative catalyst: the strength and the particle density are higher, and the hydrocarbon production rate is higher, on a catalyst weight basis and a catalyst volume basis, without detriment to the selectivity.

## Claims

1. A process for preparing a catalyst support or a supported metal catalyst suitable for use in a Fischer-Tropsch synthesis process which process comprises:
(a) admixing a refractory oxide comprising titania having a surface area of at least 0.5 m²/g with a solution of a precursor of titanium dioxide and, if a supported metal catalyst is prepared, with a precursor of the metal or the metal itself, yielding a slurry,
(b) drying of the slurry, and
(c) calcining.

2. A process as claimed in claim 1, **characterised in that** the precursor of the titanium dioxide is an organic salt or a chelate, an alcoholate, or alkyl compound.

3. A process as claimed in claim 1 or 2, **characterised in that** the precursor of the titanium dioxide is an acetate, propionate, citrate, acetylacetonate, alkyl acetoacetate, chelate with lactic acid, ethylate, aminoethylate, isopropylate, ethyl compound, or isooctyl compound.

4. A process as claimed in any one of claims 1-3, **characterised in that** the precursor of the titanium dioxide is tetraethyl titanate, isostearoyl titanate, octyleneglycol titanate, triethanolamine titanate, or the ammonium salt of lactic acid chelated titanate.

5. A process as claimed in any one of claims 1-4, **characterised in that** the quantity of the precursor of the titanium dioxide is in the range of from 0.5 to 25 %w, preferably from 1 to 10 %w, calculated as the weight of the which can be formed from the precursor, relative to the weight of the refractory oxide employed in step (a).

6. A process as claimed in any one of claims 1-5, **characterised in that** the solvent is an aqueous solvent.

7. A process for producing a supported metal catalyst, **characterised in that** a precursor of the metal or the metal itself is deposited on a catalyst support which is prepared according to a process as claimed in any one of claims 1-6.

8. A catalyst support or a supported metal catalyst suitable for use in a Fischer-Tropsch synthesis process which is obtainable by a process as claimed in any one of claims 1-7.

9. A supported metal catalyst as claimed in claim 8, **characterised in that** the catalytically active metal is a Group VIII metal, preferably cobalt.

10. A supported metal catalyst as claimed in claim 8 or 9, **characterised in that** the Group VIII metal is present at least partly in metallic form.

11. A process for producing hydrocarbons, which process comprises contacting a mixture of carbon monoxide and hydrogen at elevated temperature and pressure with a supported metal catalyst as claimed in claim 10, preferably in a three phase chemical process.

## Patentansprüche

1. Verfahren zur Herstellung eines Katalysatorträgers oder eines geträgerten Metallkatalysators, der zur Verwendung in einem Fischer-Tropsch-Syntheseverfahren geeignet ist, wobei das Verfahren umfasst:
(a) Mischen eines feuerfesten Oxids, umfassend Titandioxid mit einer Oberfläche von mindestens 0,5 m²/g mit einer Lösung eines Titandioxid-Vorläufers und, wenn ein geträgerter Metallkatalysator hergestellt wird, mit einem Vorläufer des Metalls oder dem Metall selbst, wobei eine Aufschlämmung erhalten wird,
(b) Trocknen der Aufschlämmung und
(c) Kalzinieren.

2. Verfahren nach Anspruch 1, **dadurch gekennzeichnet, dass** der Titandioxid-Vorläufer ein organisches Salz oder eine Chelat, eine Alkoholat, oder Alkylverbindung ist.

3. Verfahren nach Anspruch 1 oder 2, **dadurch gekennzeichnet, dass** der Titandioxid-Vorläufer ein Acetat, Propionat, Citrat, Acetylacetonat, Alkylacetonat, Milchsäure-Chelat, Ethylat, Aminoethylat, Isopropylat, eine Ethylverbindung oder eine Isooctylverbindung ist.

4. Verfahren nach einem der Ansprüche 1 - 3, **dadurch gekennzeichnet, dass** der Titandioxid-Vorläufer Tetraethyltitanat, Isosteaoryltitanat, Octylenglycoltitanat, Triethanolamintitanat, oder das Ammoniumsalz von Milchsäure-chelatiertem Titanat ist.

5. Verfahren nach einem der Ansprüche 1 - 4, **dadurch gekennzeichnet, dass** die Menge an Titandioxid-Vorläufer im Bereich von 0,5 bis 25 Gew.-%, vorzugsweise 1 bis 10 Gew.-%, liegt, berechnet als das Gewicht, das aus dem Vorläufer gebildet werden kann, in Bezug auf das Gewicht des in Schritt (a) verwendeten, feuerfesten Oxids.

6. Verfahren nach einem der Ansprüche 1 - 5, **dadurch gekennzeichnet, dass** das Lösungsmittel ein wässriges Lösungsmittel ist.

7. Verfahren zur Herstellung eines geträgerten Metallkatalysators, **dadurch gekennzeichnet, dass** ein Vorläufer des Metalls oder das Metall selbst auf dem Katalysatorträger abschieden wird, der gemäß einem Verfahren nach einem der Ansprüche 1 - 6 hergestellt wird.

8. Katalysatorträger oder geträgerter Metallkatalysator, der zur Verwendung in einem Fischer-Tropsch-Syntheseverfahren geeignet ist und durch das Verfahren nach einem der Ansprüche
1 - 7 erhalten werden kann.

9. Geträgerter Metallkatalysator nach Anspruch 8, **dadurch gekennzeichnet, dass** das katalytisch aktive Metall ein Metall der Gruppe VIII, vorzugsweise Kobalt, ist.

10. Geträgerter Metallkatalysator nach Anspruch 8 oder 9, **dadurch gekennzeichnet, dass** das Metall der Gruppe VIII zumindest teilweise in metallischer Form vorliegt.

11. Verfahren zur Herstellung von Kohlenwasserstoffen, wobei das Verfahren umfasst: Kontaktieren eines Gemischs aus Kohlenmonoxid und Wasserstoff bei erhöhter Temperatur und Druck mit einem geträgerten Metallkatalysator nach Anspruch 10, vorzugsweise in einem 3-stufigen chemischen Verfahren.

## Revendications

1. Procédé pour préparer un support de catalyseur ou un catalyseur de métal supporté approprié pour une utilisation dans le cadre d'un procédé de synthèse de Fischer-Tropsch, lequel procédé comprend les étapes consistant à :
(a) mélanger un oxyde réfractaire comprenant de l'oxyde de titane présentant une surface spécifique d'au moins 0,5 m²/g à une solution d'un précurseur de dioxyde de titane et, dans le cas où l'on prépare un catalyseur de métal supporté, à un précurseur du métal ou au métal lui-même, ce qui donne une suspension,
(b) sécher la suspension, et
(c) calciner.

2. Procédé selon la revendication 1, **caractérisé en ce que** le précurseur du dioxyde de titane est un sel organique ou un chélate, un alcoolate ou un composé d'alkyle.

3. Procédé selon la revendication 1 ou 2, **caractérisé en ce que** le précurseur du dioxyde de titane est un acétate, un propionate, un citrate, un acétyl-acétonate, un acétoacétate d'alkyle, un chélate réalisé avec de l'acide lactique, un éthylate, un aminoéthylate, un isopropylate, un composé d'éthyle ou un composé d'isooctyle.

4. Procédé selon l'une quelconque des revendications 1 à 3, **caractérisé en ce que** le précurseur du dioxyde de titane est le titanate de tétraéthyle, le titanate d'isostéaroyle, le titanate d'octylèneglycol, le titanate de triéthanolamine ou le sel d'ammonium d'un titanate chélaté avec l'acide lactique.

5. Procédé selon l'une quelconque des revendications 1 à 4, **caractérisé en ce que** la quantité de précurseur du dioxyde de titane se situe dans la plage de 0,5 à 25 % en poids, de préférence, de 1 à 10 % en poids, calculée comme le poids qui peut être formé à partir du précurseur, par rapport au poids de l'oxyde réfractaire employé à l'étape (a).

6. Procédé selon l'une quelconque des revendications 1 à 5, **caractérisé en ce que** le solvant est un solvant aqueux.

7. Procédé de production d'un catalyseur de métal supporté, **caractérisé en ce qu'**un précurseur du métal ou le métal lui-même est déposé sur un support de catalyseur qui est préparé selon un procédé tel que revendiqué dans l'une quelconque des revendications 1 à 6.

8. Support de catalyseur ou catalyseur de métal supporté convenant à une utilisation dans le cadre d'un procédé de synthèse de Fischer-Tropsch, lequel support peut être obtenu par un procédé tel que revendiqué dans l'une quelconque des revendications 1 à 7.

9. Catalyseur de métal supporté selon la revendication 8, **caractérisé en ce que** le métal actif au plan catalytique est un métal du groupe VIII, de préférence le cobalt.

10. Catalyseur de métal supporté selon la revendication 8 ou 9, **caractérisé en ce que** le métal du groupe VIII est présent au moins partiellement sous forme métallique.

11. Procédé de production d'hydrocarbures, lequel procédé comprend la mise en contact d'un mélange de monoxyde de carbone et d'hydrogène à température et pression élevées avec un catalyseur de métal supporté selon la revendication 10, de préférence dans un processus chimique à trois phases.
